# EUROPÄISCHE PATENTSCHRIFT

(11) **EP 1 635 619 B1**
(45) Veröffentlichungstag und Bekanntmachung des Hinweises auf die Patenterteilung: **14.10.2009**
(21) Anmeldenummer: 05017526.4
(22) Anmeldetag: 11.08.2005
(51) Int. Cl.: H05B 41/04, H01F 38/12

(54) **Hochdruckentladungslampe mit Transformator**
High-pressure discharge lamp with transformer
Lampe à décharge haute-pression avec transformateur

(30) Priorität: 10.09.2004 DE 102004044368
(43) Veröffentlichungstag der Anmeldung: 15.03.2006
(73) Patentinhaber: Osram Gesellschaft mit beschränkter Haftung, 81543 München (DE)
(72) Erfinder: Burkhardt, Matthias, 85662 Hohenbrunn (DE); Schimke, Conrad, 10437 Berlin (DE)

(56) Entgegenhaltungen:
- EP-A- 0 484 074
- EP-A- 0 515 958
- EP-A- 1 096 836
- FR-A- 2 838 912

## Beschreibung

Die Erfindung betrifft eine Hochdruckentladungslampe gemäß dem Oberbegriff des Patentanspruchs 1.

### I. Stand der Technik

Eine derartige Hochdruckentladungslampe ist beispielsweise in der internationalen Patentanmeldung mit der Offenlegungsnummer WO 00/59269 offenbart. Diese Offenlegungsschrift beschreibt eine Hochdruckentladungslampe, in deren Lampensockel ein Ringkerntransformator mit einer Primärwicklung und einer Sekundärwicklung angeordnet ist. Der Ringkerntransformator ist Bestandteil einer Zündvorrichtung zum Zünden der Gasentladung in der Hochdruckentladungslampe.

Die EP 0 515 958 A1 offenbart einen Transformator zum Zünden und Betreiben von Hochdruckentladungslampen in Kraftfahrzeugen. Die Primärwicklung und Sekundärwicklung dieses Transformators umgeben den Transformatorkern und bestehen jeweils aus einer Folie, wobei zwischen den einzelnen Lagen der Primär- und Sekundärwicklung eine Isolierfolie angeordnet ist.

Die EP 1 096 836 A1 beschreibt einen Zündtransformator für eine Hochdruckentladungslampe mit einem innen liegend angeordneten Ende der Sekundärwicklung des Zündtransformators, das zum Zünden der Hochdruckentladungslampe mit Hochspannung beaufschlagt wird.

Die EP 0 484 074 A2 offenbart einen Topfkernförmigen Streufeldtransformator.

### II. Darstellung der Erfindung

Es ist die Aufgabe der Erfindung, eine Hochdruckentladungslampe mit einem Transformator bereitzustellen, der besser als Zündtransformator für die Hochdruckentladungslampe geeignet ist.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Der Transformator in der erfindungsgemäßen Hochdruckentladungslampe weist einen Ferritkern mit mindestens einer Primärwicklung sowie mindestens einer Sekundärwicklung auf, wobei die mindestens eine Sekundärwicklung von einem Metallband gebildet wird, das derart auf dem Ferritkern angeordnet ist, dass das Hochspannung führende Ende der mindestens einen Sekundärwicklung innen liegend angeordnet ist.

Durch die Ausbildung der mindestens einen Sekundärwicklung als Metallband wird ein räumlich kompakter Aufbau des Transformators ermöglicht, so dass er im Innenraum des Lampensockels einer Hochdruckentladungslampe für Fahrzeugscheinwerfer Platz findet. Das vorgenannte Metallband ermöglicht ferner, eine Sekundänvicklung mit einem sehr geringen Gleichstromwiderstand aufzubauen. Da das Hochspannung führende Ende der mindestens einen Sekundärwicklung innenliegend angeordnet ist, ermöglicht der erfindungsgemäße Transformator eine bessere Isolierung des Hochspannung führenden Endes und eine bessere Trennung des Hochspannung führenden Endes der mindestens einen Sekundärwicklung von der Primärwicklung. Au-βerdem ist der erfindungsgemäße Transformator durch diese innenliegende Anordnung des Hochspannung führenden Endes der mindestens einen Sekundärwicklung besser auf die Kontaktierung mit der aus dem sockelseitigen Ende des Entladungsgefäßes herausgeführten Stromzuführung vorbereitet, da die vorgenannte Stromzuführung näherungsweise in der Längsachse der Hochdruckentladungslampe verläuft.

Um einen möglichst kompakten Aufbau des erfindungsgemäßen Transformators zu gewährleisten, ist, ähnlich wie bei einem Spartransformator, ein erstes Ende der mindestens einen Sekundärwicklung mit einem Ende der mindestens einen Primärwicklung verbunden ist und das zweite Ende der mindestens einen Sekundärwicklung ist das oben genannte Hochspannung führende Ende. Dadurch befinden sich die miteinander verbundenen Enden der Primär- und Sekundärwicklung auf demselben elektrischen Potential. Vorzugsweise ist die mindestens eine Primärwicklung auf der mindestens einen Sekundärwicklung angeordnet, so dass die miteinander verbundenen Enden der beiden vorgenannten Transformatorwicklungen und auch das andere Ende der mindestens einen Primärwicklung außenliegend angeordnet sind. Das vorgenannte erste Ende der mindestens einen Sekundärwicklung ist daher vorzugsweise an ihrer äußeren Windung angeordnet. Dadurch wird eine räumliche Trennung des Hochspannung führenden Endes der mindestens einen Sekundärwicklung von den Enden der mindestens einen Primärwicklung erreicht. Diese räumliche Anordnung kann auf vorteilhafte Weise dadurch erzielt werden, dass die mindestens eine Sekundärwicklung auf einem zylindrischen Abschnitt des Ferritkerns angeordnet ist, wobei die Wickelachse der mindestens einen Sekundärwicklung in der Zylinderachse des zylindrischen Abschnitts liegt und das Hochspannung führende Ende der mindestens einen Sekundärwicklung an ihrer dem zylindrischen Ferritkernabschnitt nächstliegenden, inneren Windung angeordnet ist. Vorzugsweise sind die Windungen der mindestens einen Sekundärwicklung in mehreren Lagen übereinander angeordnet, wobei zwei benachbarte Lagen bzw. Windungen durch ein elektrisch isolierendes Material getrennt sind. Dadurch wird ein elektrischer Kurzschluss zwischen den Windungen vermieden und zwischen zwei benachbarten Windungen bzw. Lagen liegt nur ein geringer Teil der von dem Transformator während des Betriebs erzeugten Hochspannung an. Als isolierendes Material wird vorteilhafter Weise ein Kunststoffband verwendet, das zusammen mit dem Metallband der mindestens einen Sekundärwicklung auf einen Dorn oder einen Spulenkörper des erfindungsgemäßen Transformators aufgewickelt werden kann. Die breite des Kunststoffbandes ist vorzugsweise größer als die Breite des vorgenannten Metallbandes und das Kunststoffband überragt das Metallband an beiden Längskanten, um einen elektrischen Kurzschluss zwischen den Windungen bzw. Lagen der mindestens einen Sekundärwicklung zu verhindern.

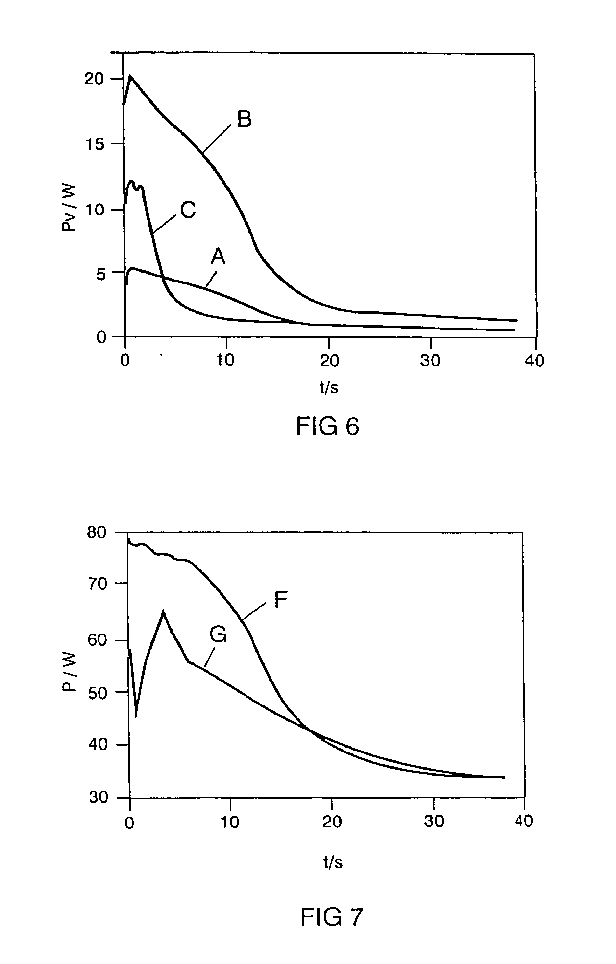

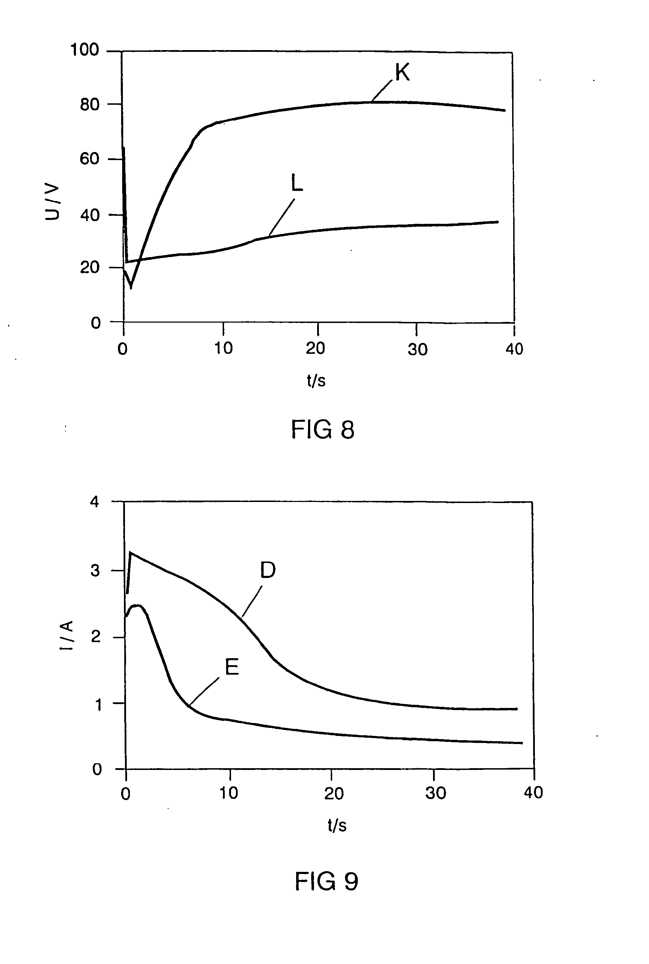

Die mindestens eine Sekundärwicklung des erfindungsgemäßen Transformators ist vorzugsweise derart ausgebildet, dass ihr Gleichstromwiderstand kleiner oder gleich 0,5 Ohm ist. Dadurch eignet sich der erfindungsgemäße Transformator auch zum Einsatz als Zündtransformator für eine in Fahrzeugscheinwerfern verwendete, quecksilberfreie Halogen-Metalldampf-Hochdruckentladungslampe, die eine Nennleistung von 35 Watt besitzt. In den Messkurven A und B der Figur 6 ist zum Vergleich der zeitliche Verlauf der in einer Zündvorrichtung mit dem erfindungsgemäßen Transformator (Kurve A) und mit einem konventionellen Transformator (Kurve B) auftretende Verlustleistung für eine quecksilberfreie Halogen-Metalldampf-Hochdruckentladungslampe dargestellt, wenn die Sekundärwicklungen während des Lampenbetriebs von dem Lampenstrom durchflossen werden. Die Sekundärwicklung des erfindungsgemäßen Transformators besitzt einen Gleichstromwiderstand von nur 0,5 Ohm, während der Gleichstromwiderstand der Sekundärwicklung des konventionellen Transformators 2,0 Ohm beträgt. Die Verlustleistung beträgt bei der Zündvorrichtung mit dem erfindungsgemäßen Transformator nur ein Viertel der Verlustleistung der Zündvorrichtung mit dem konventionellen Transformator. Zum Vergleich ist in Messkurve C der Figur 6 auch noch der zeitliche Verlauf der in einer Zündvorrichtung mit dem vorgenannten konventionellen Transformator auftretenden Verlustleistung für eine quecksilberhaltige Halogen-Metalldampf-Hochdruckentladungslampe dargestellt. Aus dem Vergleich der Messkurven A und C ist zu erkennen, dass beim Betrieb einer quecksilberfreien Halogen-Metalldampf-Hochdruckentladungslampe zur Reduktion der Verlustleistung in der Zündvorrichtung auf das Niveau der beim Betrieb einer quecksilberhaltigen Halogen-Metalldampf-Hochdruckentladungslampe in der Zündvorrichtung auftretenden Verlustleistung der Gleichstromwiderstand der vom Lampenstrom durchflossenen Sekundärwicklung auf 25 Prozent des üblichen Wertes verringert werden muss. Bei gleicher Leistungsaufnahme besitzen quecksilberfreie Halogen-Metalldampf-Hochdruckentladungslampen einen deutlich höheren Lampenstrom als quecksilberhaltige Halogen-Metalldampf-Hochdruckentladungslampen, wie aus den Messkurven D und E der Figur 9 ersichtlich ist. Die Messkurve D bzw. E zeigt den zeitlichen Verlauf des Lampenstroms für eine quecksilberfreie bzw. quecksilberhaltige Halogen-Metalldampf-Hochdruckentladungslampe. Aufgrund des höheren Lampenstroms sind die Verluste in der vom Lampenstrom durchflossenen Sekundärwicklung des Transformators entsprechend höher. Die Figuren 7 und 8 zeigen für diese Lampen einen Vergleich der Leistungsaufnahme und der Brennspannung. In der Figur 7 ist der zeitliche Verlauf der Leistungsaufnahme für die obige quecksilberfreie Halogen-Metalldampf-Hochdruckentladungslampe (Messkurve F) und die quecksilberhaltige Halogen-Metalldampf-Hochdruckentladungslampe (Messkurve G) dargestellt. Während der Startphase besitzt die quecksilberfreie Halogen-Metalldampf-Hochdruckentladungslampe eine höhere Leistungsaufnahme als die quecksilberhaltige Halogen-Metalldampf-Hochdruckentladungslampe. Nach Beendigung der Startphase entspricht die Leistungsaufnahme bei beiden vorgenannten Lampen ca. ihrer Nennleistung von 35 Watt. Die Figur 8 zeigt den zeitlichen Verlauf der Brennspannung für diese Lampen. Die quecksilberhaltige Halogen-Metalldampf-Hochdruckentladungslampe (Messkurve K) besitzt eine höhere Brennspannung als die quecksilberfreie Halogen-Metalldampf-Hochdruckentladungslampe (Messkurve L).

Der erfindungsgemäße Transformator ist vorteilhafter Weise derart ausgebildet, dass er einen magnetischen Rückschluss aufweist, um eine Wechselwirkung seines Magnetfeldes mit metallischen Teilen der Hochdruckentladungslampe, beispielsweise mit einem den Lampensockel umgebenden, als elektromagnetische Abschirmung dienenden Metallgehäuse, oder des Fahrzeugscheinwerfers zu reduzieren. Erfindungsgemäß ist der Ferritkern des Transformators daher als Topfkern ausgebildet. Dadurch sind die Wicklungen des Transformators weitgehend von dem Ferritmaterial umschlossen und das nach außen wirkende Streufeld des Transformators ist gering.

Der erfindungsgemäße Transformator eignet sich aufgrund seiner oben erläuterten Vorteile als Zündtransformator in einer Zündvorrichtung für Hochdruckentladungslampen, insbesondere für in Fahrzeugscheinwerfern verwendete Halogen-Metalldampf-Hochdruckentladungslampen mit einer Nennleistung von 35 Watt.

Vorzugsweise ist der erfindungsgemäße Transformator in dem Innenraum des Lampensockels einer Hochdruckentladungslampe, insbesondere einer Halogen-Metalldampf-Hochdruckentladungslampe für Fahrzeugscheinwerfer angeordnet. Der Transformator ist als Bestandteil einer Zündvorrichtung, beispielsweise einer Impulszündvorrichtung, für die Hochdruckentladungslampe ausgebildet. Außerdem sind vorzugsweise auch die anderen elektrischen Bauteile der Zündvorrichtung in dem Innenraum des Lampensockels untergebracht.

Die erfindungsgemäße Hochdruckentladungslampe, vorzugsweise eine Halogen-Metalldampf-Hochdruckentladungslampe für Fahrzeugscheinwerfer, besitzt einen im Innenraum ihres Lampensockels angeordneten Transformator zum Erzeugen ihrer Zündspannung, wobei der Transformator mindestens eine Sekundärwicklung aufweist, deren Gleichstromwiderstand kleiner oder gleich 0,5 Ohm ist, um die oben beschriebenen Verlustleistungen in der Zündvorrichtung zu reduzieren.

Gemäß dem besonders bevorzugten Ausführungsbeispiel der erfindungsgemäßen Hochdruckentladungslampe ist in deren Lampensockel ein Transformator untergebracht, dessen Ferritkern als Topfkern ausgebildet ist, wobei der Topfkern einen im Innenraum des Topfkerns angeordneten, hohlzylindrischen Abschnitt besitzt, dessen Innendurchmesser größer als der Außendurchmesser des sockelseitigen Endes des Entladungsgefäßes der Hochdruckentladungslampe ist, das in den hohlzylindrischen Abschnitt hineinragt. Dadurch wird eine platzsparende Anordnung von Lampengefäß und Transformator erreicht. Außerdem dient das sockelseitige Ende des Entladungsgefäßes als Isolierung für die darin verlaufende sockelseitige Stromzuführung der Lampe. Die mindestens eine Sekundärwicklung des Transformators ist aus demselben Grund vorzugsweise unmittelbar auf hohlzylindrischen Abschnitt des Topfkerns oder auf einen diesen Abschnitt umgebenden Spulenkörper angeordnet. Das Hochspannung führende Ende der mindestens einen Sekundärwicklung des Transformators ist vorzugsweise mit der vorgenannten sockelseitigen Stromzuführung der Hochdruckentladungslampe verbunden. Dadurch wird eine gute Hochspannungsisolierung der Lampe gewährleistet. Insbesondere wird dadurch nur die nahezu vollständig vom Lampengefäß umschlossene, sockelseitige Stromzuführung mit der Zündspannung beaufschlagt und die Hochspannung führenden Teile sind innerhalb des Topfkerns angeordnet. Der im Lampensockel angeordnete Transformator ist vorteilhafter Weise in einer elektrisch isolierenden Vergussmasse eingebettet. Dadurch wird einerseits elektrische Isolierung zwischen den Wicklungen bzw. den Windungen der Wicklungen verbessert und andererseits werden auch die beiden Hälften des Topfkerns in einem festen Abstand zueinander fixiert.

Um die Kontaktierung des Transformators mit den anderen elektrischen Bauteilen der Zündvorrichtung zu erleichtern, ist eine mit metallischen Kontaktstiften versehene Trägerplatte vorgesehen, wobei die Kontaktstifte jeweils mit einem Ende der mindestens einen Primärwicklung verbunden sind. Die Trägerplatte besteht aus einem elektrisch isolierenden Material und ist auf der Außenseite des Transformators fixiert. Sie kann ebenfalls in der oben genannten Vergussmasse eingebettet sein. Die Kontaktstifte ermöglichen eine Steckverbindung mit den elektrischen Anschlüssen einer Montageplatine, auf der vorteilhafter Weise die anderen Bauteile der Zündvorrichtung montiert und kontaktiert sind. Die Montageplatine mit den darauf fixierten anderen Bauteilen der Zündvorrichtung kann dadurch als vorgefertigtes Modul in den Lampensockel eingesetzt und durch die vorgenannte Steckverbindung mit dem

Transformator kontaktiert werden.

### III. Beschreibung des bevorzugten Ausführungsbeispiels

Nachstehend wird die Erfindung anhand eines bevorzugten Ausführungsbeispiels näher erläutert. Es zeigen:
- Figur 1: Eine Seitenansicht einer Hochdruckentladungslampe mit einem im Lampensockel angeordneten Transformator gemäß des bevorzugten Ausführungsbeispiels der Erfindung in teilweise geschnittener, schematischer Darstellung

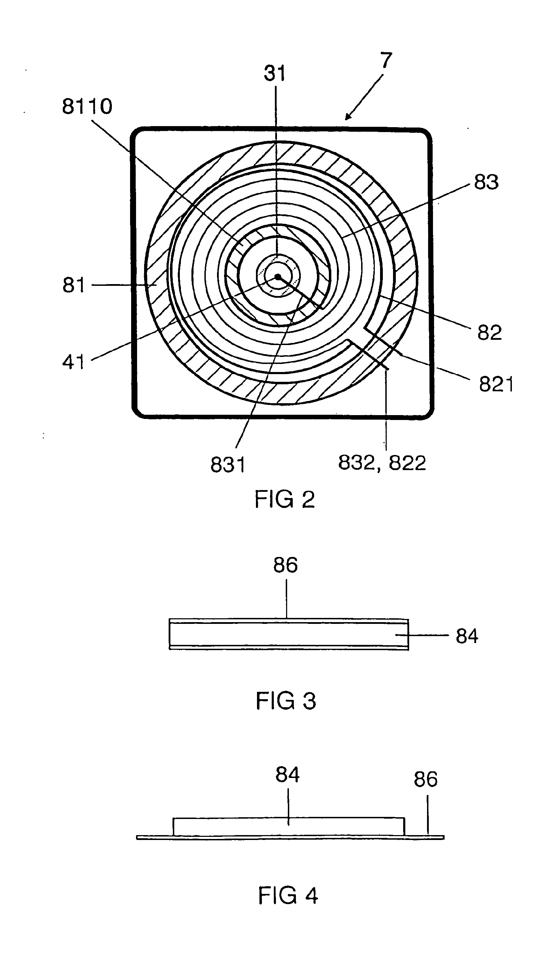

- Figur 2: Eine Querschnitt durch den in Figur 1 abgebildeten Lampensockel und den Transformator in einer Ebene senkrecht zur Längsachse der Lampe
- Figur 3: Eine schematische Draufsicht auf das Kupferband und das Kunststoffband, aus der die Sekundärwicklung des in Figur 1 abgebildeten Transformators besteht
- Figur 4: Eine schematische Seitenansicht des in Figur 3 gezeigten Kupferbandes und des Kunststoffbandes

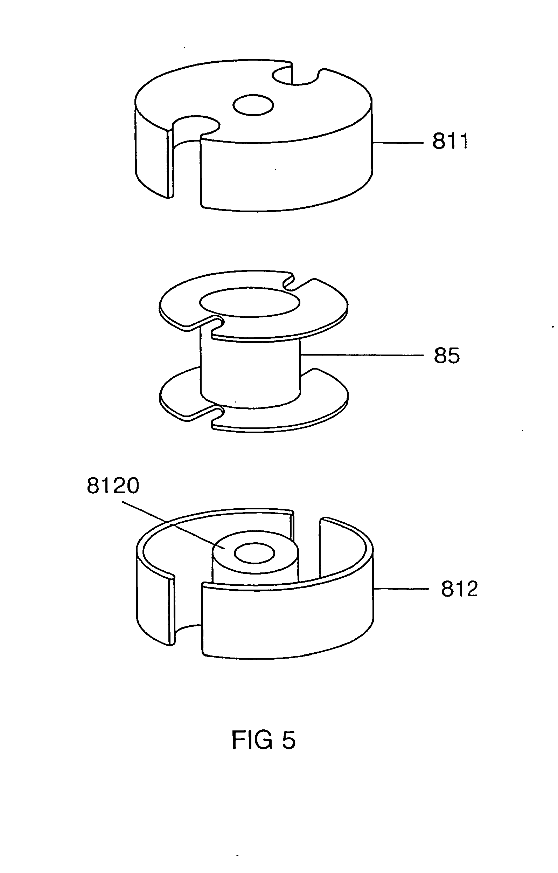

- Figur 5: Eine schematische Darstellung der beiden Hälften des Ferritkerns des in Figur 1 abgebildeten Transformators und des Spulenkörpers
- Figur 6: Den zeitlichen Verlauf der in der Zündvorrichtung auftretenden Verlustleistung für eine quecksilberfreie Halogen-Metalldampf-Hochdruckentladungslampe mit dem erfindungsgemäßen Transformator (Kurve A) und einem konventionellen Transformator (Kurve B) sowie für eine quecksilberhaltige Halogen-Metalldampf-Hochdruckentladungslampe mit einem konventionellen Transformator (Kurve C)
- Figur 7: Den zeitlichen Verlauf der Leistungsaufnahme für eine quecksilberfreie Halogen-Metalldampf-Hochdruckentladungslampe (Kurve D) und für eine quecksilberhaltige Halogen-Metalldampf-Hochdruckentladungslampe (Kurve E)
- Figur 8: Den zeitlichen Verlauf der Brennspannung für die quecksilberfreie Halogen-Metalldampf-Hochdruckentladungslampe (Kurve F) und die quecksilberhaltige Halogen-Metalldampf Hochdruckentladungslampe (Kurve G)
- Figur 9: Den zeitlichen Verlauf des Lampenstroms für die quecksilberfreie Halogen-Metalldampf-Hochdruckentladungslampe (Kurve D) und die quecksilberhaltige Halogen-Metalldampf-Hochdruckentladungslampe (Kurve E)

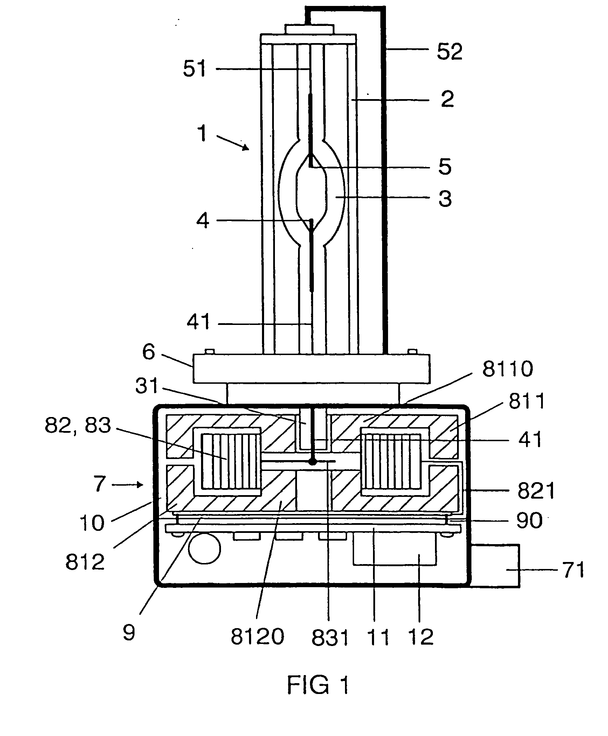

Bei dem in Figur 1 abgebildeten Ausführungsbeispiel der Erfindung handelt es sich um eine quecksilberfreie Halogen-Metalldampf-Hochdruckentladungslampe mit einer Nennleistung von 35 Watt, die für den Einsatz in einem Fahrzeugscheinwerfer vorgesehen ist.

Diese Lampe 1 besitzt ein von einem Außenkolben 2 umschlossenes, zweiseitig abgedichtetes Entladungsgefäß 3, in dem eine ionisierbare Füllung sowie zwei Elektroden 4, 5 zum Erzeugen einer Gasentladung angeordnet sind. Die Lampengefäße 2, 3 bestehen aus Quarzglas und sind in einem ringförmigen Flansch 6 des aus Kunststoff bestehenden Lampensockels 7 fixiert. Die Elektroden 4, 5 sind jeweils mit einer aus dem Entladungsgefäß 3 herausgeführten Stromzuführung 41, 51 verbunden. Die aus dem sockelfernen Ende des Entladungsgefäßes 3 herausgeführte Stromzuführung 51 ist über eine zum Lampensockel 7 zurückgeführte Stromrückführung 52 mit dem elektrischen Anschluss 71 des Lampensockel 7 kontaktiert. Im Innenraum des Lampensockels 7 ist ein Transformator 8 mit einem als Topfkern ausgebildeten Ferritkern 81 und einer Primärwicklung 82 sowie einer Sekundärwicklung 83 angeordnet. Der Transformator 8 ist ähnlich wie ein Spartransformator ausgebildet, das heißt, ein Ende 832 der Sekundärwicklung 83 ist mit einem Ende 822 der Primärwicklung 82 verbunden. Der Topfkern 81 besitzt zwei, im Lampensockel 7 übereinander angeordnete und durch einen Spalt getrennte identische Hälften 811, 812. Beide Hälften 811, 812 weisen jeweils einen in den Innenraum des Topfkerns ragenden, zylindrischen Abschnitt 8110 bzw. 8120 auf. Der zylindrische Abschnitt 8110 der oberen Hälfte 811 ist als Hohlzylinder ausgebildet, dessen Innendurchmesser größer als der Außendurchmesser des sockelseitigen Endes 31 des Entladungsgefäßes 3 ist. Das sockelseitige Ende 31 des Entladungsgefäßes 3 ragt in den hohlzylindrischen Abschnitt 8110 des Topfkerns 8 hinein. Die aus dem sockelseitigen Ende 31 des Entladungsgefäßes 3 herausragende Stromzuführung 41 ist mit dem Hochspannung führenden Ende 831 der Sekundärwicklung 83 verschweißt. Die vorgenannte Schweißverbindung zwischen dem Ende 831 und der Stromzuführung 41 ist in einem Spalt zwischen den zylindrischen Abschnitten 8110, 8120 angeordnet. Die beiden Enden 821, 822 der Primärwicklung 82 sind jeweils mit einem auf einer Trägerplatte 9 angeordneten, metallischen Kontaktstift 90 verbunden. Die Trägerplatte 9 besteht aus Kunststoff und ist auf der Unterseite der unteren Hälfte 812 des Topfkerns 81 angeordnet. Sie ist zusammen mit dem Transformator 8 in einer Vergussmasse 10 eingebettet. Die Vergussmasse 10 erstreckt sich auch in den Innenraum des Topfkerns 81 und füllt den Spalt zwischen den beiden Hälften 811, 812 des Topfkerns 81 aus. Der Topfkern 81 besteht aus einem elektrisch hoch-isolierenden Nickel-Zink-Ferrit.

Auf der Trägerplatte 9 ist eine Montageplatine 11 aufgesteckt. Die beiden, aus der Vergussmasse 10 herausragenden metallische Kontaktstifte 90 sind jeweils mit einem elektrischen Kontakt auf der Montageplatine 11 verbunden. Die Montageplatine 11 ist mit den anderen elektrischen Bauteilen 12 der als Impulszündvorrichtung ausgebildeten Zündvorrichtung der Hochdruckentladungslampe 1 bestückt. Die Spannungsversorgung dieser Bauteile und des Transformators 8 sowie der Lampe 1 erfolgt über den als Buchse ausgebildeten elektrischen Anschluss 71. Bei den elektrischen Bauteilen 12 handelt es sich im wesentlichen um eine Funkenstrecke und einen Zündkondensator zum Aufbau der Durchbruchsspannung über der Funkenstrecke sowie gegebenenfalls noch weiterer Bauteile. Der Aufbau einer derartigen Impulszündvorrichtung ist beispielsweise in dem oben zitierten Stand der Technik offenbart.

Die Sekundärwicklung 83 des Transformators 8 besteht aus einem Kupferband 84, das in vielen Lagen auf den Spulenkörper 85 des Transformators 8 aufgewickelt ist.

Jede der Lagen bildet eine Windung der Sekundärwicklung 83. Zur elektrischen Isolierung benachbarter Lagen bzw. Windungen der Sekundärwicklung 83 dient ein Kunststoffband 86 aus PEN (Polyäthylennaphtalat), das zwischen den einzelnen Lagen bzw. Windungen der Sekundärwicklung 83 angeordnet ist. Das Kunststoffband 86 und das Kupferband 84 werden zum Herstellen des Transformators 8 übereinander gelegt, so dass das breitere Kunststoffband 86 das Kupferband an beiden Längskanten überragt. Anschließend werden beide Bänder 84, 86 gemeinsam auf den Spulenkörper 85 aufgewickelt. Das Hochspannung führende Ende 831 der Sekundärwicklung 83 ist mit der inneren Windung bzw. der ersten, inneren Lage auf dem Spulenkörper 85 verbunden. Das Kupferband 84 besitzt eine Breite von 6 Millimeter und eine Dicke von 50 Mikrometer. Das Kunststoffband 86 besitzt eine Breite von 8 Millimeter und eine Dicke von 8 Mikrometer. Die Sekundärwicklung 83 besitzt 170 Windungen, die in 170 Lagen um den Spulenkörper 85 angeordnet sind. Auf die Sekundärwicklung 83 ist die Primärwicklung 82 gewickelt, die aus 2,5 Windungen eines weiteren Kupferbandes mit einer Dicke von 0,2 Millimeter und einer Breite von 1,6 Millimeter besteht. Die 2,5 Windungen der Primärwicklung 82 sind nebeneinander, in einer Lage über der Sekundärwicklung 83 auf dem Spulenkörper 85 angeordnet. Der Topfkern 81 weist einen Spalt auf, der vorzugsweise zwischen den beiden hohlzylindrischen Abschnitten 8110 und 8120 angeordnet ist. Die beiden Hälften 811, 812 des Topfkerns 81 liegen vorzugsweise direkt, ohne Spalt, aufeinander, so dass sich ihre Außenwände berühren. Das Ende 821 der Primärwicklung 82 ist vorzugsweise durch einen Durchbruch in der Außenwand des Topfkerns 81 nach außen geführt.

Der von den Lampengefäßen 2, 3 abgewandte untere Teil des Gehäuses des Lampensockels 7 ist als Deckel ausgebildet, um den Transformator 8 und die Montageplatine 11 mit den darauf kontaktierten Bauteilen 11 in den Lampensockel 7 einsetzen zu können. Der Lampesockel 7 kann von einem auf Massebezugspotential befindlichen, metallischen Gehäuse (nicht abgebildet) umgeben sein, wie in dem oben zitierten Stand der Technik offenbart ist, um die elektromagnetische Verträglichkeit der Lampe zu verbessern.

Die Erfindung beschränkt sich nicht auf das oben näher erläuterte Ausführungsbeispiel. Auf den Spulenkörper 85 kann verzichtet werden, wenn der Ferritkern aus einem hoch isolierenden Material besteht, wie beispielsweise einem Nickel-Zink-Ferrit. In diesem Fall kann die Sekundärwicklung 83 direkt auf einen Dom gewickelt werden. Nach dem Wicklungsprozess kann die Sekundärwicklung 83 von dem Dorn abgenommen und auf den hohlzylindrischen Abschnitt 8110 aufgesetzt werden.

## Patentansprüche

1. Hochdruckentladungslampe mit einem Entladungsgefäß (3) und mit einem innerhalb des Lampensockels (7) angeordneten Transformator (8) zum Erzeugen einer Zündspannung für die Hochdruckentladungslampe, der einen Ferritkern (81) und mindestens eine Primärwicklung (82) sowie mindestens eine Sekundärwicklung (83) aufweist, wobei die Sekundärwicklung (83) ein Hochspannung führendes Ende (831) besitzt, das innen liegend angeordnet ist,
**dadurch gekennzeichnet, dass**
- der Ferritkern (81) als Topfkern ausgebildet ist, der einen als Hohlzylinder ausgebildeten, im Innenraum des Topfkerns (81) angeordneten Abschnitt (8110) besitzt, dessen Innendurchmesser größer als der Außendurchmesser eines sockelseitigen Endes (31) des Entladungsgefäßes (3) ist, und
- das sockelseitige Ende (31) des Entladungsgefäßes (3) in den hohlzylindrischen Abschnitt (8110) hineinragt, und wobei
- die Sekundärwicklung (83) von einem Metallband (84) gebildet wird, das in mehreren Lagen auf dem hohlzylindrischen Abschnitt (8110) angeordnet ist, so dass das Hochspannung führende Ende (831) mit einer ersten Windung bzw. inneren Lage des Metallbandes (84) und mit einer aus dem sockelseitigen Ende (31) des Entladungsgefäßes (3) herausragenden Stromzuführung (41) verbunden ist.

2. Hochdruckentladungslampe nach Anspruch 1, wobei der Transformator (8) in einer elektrisch isolierenden Vergussmasse (10) eingebettet ist.

3. Hochdruckentladungslampe nach einem der Ansprüche 1 oder 2, wobei innerhalb des Lampensockels (7) eine Montageplatine (11) mit darauf montierten und kontaktierten elektrischen Bauteilen (12) einer Zündvorrichtung für die Hochdruckentladungslampe (1) angeordnet ist.

4. Hochdruckentladungslampen nach Anspruch 3, wobei zwischen dem Transformator (8) und der Montageplatine (11) eine mit Kontaktstiften (90) versehene Trägerplatte (9) angeordnet ist, und wobei die Kontaktstifte (90) jeweils mit einem Ende (821, 822) der mindestens einen Primärwicklung (82) und mit elektrischen Kontakten auf der Montageplatine (11) verbunden sind.

5. Hochdruckentladungslampe nach einem der Ansprüche 1 bis 4, die als Halogen-Metalldampf-Hochdruckentladungslampe für Fahrzeugscheinwerfer ausgebildet ist.

6. Hochdruckentladungslampe nach Anspruch 5, wobei der Gleichstromwiderstand der mindestens einen Sekundärwicklung kleiner oder gleich 0,5 Ohm ist.

## Claims

1. High-pressure discharge lamp having a discharge vessel (3) and having a transformer (8) arranged within the lamp base (7) for generating a starting voltage for the high-pressure discharge lamp, which transformer has a ferrite core (81) and at least one primary winding (82) as well as at least one secondary winding (83), the secondary winding (83) having a high-voltage carrying end (831) which is arranged on the inside,
**characterized in that**
- the ferrite core (81) is in the form of a pot-shaped core, which has a section (8110), which is in the form of a hollow cylinder, is arranged in the interior of the pot-shaped core (81), and whose inner diameter is greater than the outer diameter of a base-side end (31) of the discharge vessel (3), and
- the base-side end (31) of the discharge vessel (3) protrudes into the hollow-cylindrical section (8110), and
- the secondary winding (83) being formed by a metal strip (84) which is arranged in a plurality of layers on the hollow-cylindrical section (8110) such that the high-voltage carrying end (831) is connected to a first winding or inner layer of the metal strip (84) and to a power supply line (41) which protrudes from the base-side end (31) of the discharge vessel (3).

2. High-pressure discharge lamp according to Claim 1, the transformer (8) being embedded in an electrically insulating casting compound (10).

3. High-pressure discharge lamp according to either of Claims 1 and 2, a mounting circuit board (11) having electrical components (12) of a starting device for the high-pressure discharge lamp (1) which are mounted thereon and with which contact is made being arranged within the lamp base (7).

4. High-pressure discharge lamp according to Claim 3, a carrier plate (9) provided with contact pins (90) being arranged between the transformer (8) and the mounting circuit board (11), and the contact pins (90) each being connected to one end (821, 822) of the at least one primary winding (82) and to electrical contacts on the mounting circuit board (11).

5. High-pressure discharge lamp according to one of Claims 1 to 4 which is in the form of a metal halide high-pressure discharge lamp for vehicle headlights.

6. High-pressure discharge lamp according to Claim 5, the DC resistance of the at least one secondary winding being less than or equal to 0.5 ohm.

## Revendications

1. Lampe à décharge à haute pression comprenant une enceinte ( 3 ) de décharge et un transformateur ( 8 ) qui est disposé à l'intérieur du culot ( 7 ) de la lampe et qui est destiné à la production d'une tension d'amorçage de la lampe à décharge à haute pression, transformateur qui a un noyau ( 81 ) de ferrite et au moins un enroulement ( 82 ) primaire ainsi qu'au moins un enroulement ( 83 ) secondaire, l'enroulement ( 83 ) secondaire ayant une extrémité ( 831 ) appliquant la haute tension et se trouvant à l'intérieur,
**caractérisée en ce que**
- le noyau ( 81 ) de ferrite est constitué en noyau en pot qui a une partie ( 8110 ) qui est constituée sous la forme d'un cylindre creux qui est disposée à l'intérieur du noyau ( 81 ) et dont le diamètre intérieur est plus grand que le diamètre extérieur d'une extrémité ( 31 ) de l'enceinte ( 3 ) de décharge se trouvant du côté du culot,
- l'extrémité de l'enceinte ( 3 ) de décharge se trouvant du côté du culot pénètre dans la partie ( 8110 ) cylindrique creuse, et dans laquelle
- l'enroulement ( 83 ) secondaire est formé par un ruban ( 84 ) métallique qui est disposé en plusieurs couches sur la partie ( 8110 ) cylindrique creuse de sorte que l'extrémité ( 831 ) appliquant la haute tension est reliée à une première spire ou à une couche intérieure du ruban ( 84 ) métallique et à une entrée ( 41 ) de courant sortant de l'extrémité ( 31 ) de l'enceinte ( 3 ) de décharge se trouvant du côté du culot.

2. Lampe à décharge à haute pression selon la revendication 1, dans laquelle le transformateur ( 8 ) est incorporé dans une composition ( 10 ) de scellement isolante du point de vue électrique.

3. Lampe à décharge à haute pression suivant l'une des revendications 1 ou 2, dans laquelle à l'intérieur du culot ( 7 ) de la lampe est montée une platine ( 11 ) de montage, ayant des modules ( 12 ) électriques, qui y sont montés et mis en contact, d'un dispositif d'amorçage de la lampe ( 1 ) à décharge à haute pression.

4. Lampe à décharge à haute pression suivant la revendication 3, dans laquelle il est monté entre le transformateur ( 8 ) et la platine ( 11 ) de montage une plaque ( 9 ) support munie de broches ( 90 ) de contact et dans laquelle les broches ( 90 ) de contact sont reliées respectivement à une extrémité ( 821, 822 ) du au moins un enroulement ( 82 ) primaire et à des contacts électriques sur la platine ( 11 ) de montage.

5. Lampe à décharge à haute pression suivant l'une des revendications 1 à 4 qui est constituée en lampe à décharge à haute pression à vapeur métallique aux halogènes pour phare de véhicule automobile.

6. Lampe à décharge à haute pression suivant la revendication 5, dans laquelle la résistance en courant continu du au moins un enroulement secondaire est inférieure ou égale à 0,5 Ohm.
